# EUROPEAN PATENT APPLICATION

(11) **EP 3 618 024 A1**
(43) Date of publication of application: **04.03.2020**
(21) Application number: 19177950.3
(22) Date of filing: 03.06.2019
(51) Int. Cl.: G08G 1/00, G08G 1/123, G06Q 10/08, G06Q 50/28, G01S 19/34, G01S 19/39, G01S 19/49

(54) **METHODS, DEVICES AND COMPUTER PROGRAM PRODUCTS FOR TRACKING OF OBJECTS IN A TRANSPORTION SYSTEM**

(30) Priority: 13.07.2018 SE 1830220
(71) Applicant: Sony Mobile Communications Inc., Shinagawa-ku Tokyo 140-0002 (JP)
(72) Inventor: Tillgren, Magnus, 221 88 Lund (SE); Exner, Peter, 217 52 Malmö (SE)
(74) Representative: Neij & Lindberg AB

(57) **Abstract**

A method for tracking an object in a transportation system is described. The method includes determining, at a first time, a first location of the object based on a positioning system. A first area includes the first location. The method includes determining, based on a movement sensor, that the object is moving. The movement sensor determines that the object is moving at a second time that is after the first time. The method includes determining, at a third time that is after the second time, based on the positioning system, a second location of the object, and setting the moving time of the object to be the second time, responsive to determining that the object has moved to the second location that is in a second area that is different from the first area. Related systems, devices and computer program products are also described.

## Description

### Field

Various embodiments described herein relate to objects in a transportation system.

### Background

Transportation systems transport cargo, goods, and other objects domestically and/or internationally using various modes of transportation such as trucks, lorries, trains, ships, and airplanes. Modern transportation systems may include complex logistics spanning multiple modes of transportation and/or multiple transportation carriers. Various waypoints may be included as transportation modes and/or carriers are changed over the course of transporting cargo from a source point to a destination point in the transportation network. A waypoint is a point or place on a route or line of travel, a stopping point, or point at which a course or route is changed. Cargo owners, transportation coordinators, and/or carriers need accurate information regarding the location of cargo during transport. Accordingly, there is a need for techniques to allow for efficiently and/or automatically tracking cargo in a transportation network.

### Summary

Various embodiments described herein provide a method of tracking an object in a transportation system. The method includes determining, at a first time, a first location of the object based on a positioning system. A first area includes the first location. The method includes determining, based on a movement sensor, that the object is moving. The movement sensor determines that the object is moving at a second time that is after the first time. The method includes determining, at a third time that is after the second time, based on the positioning system, a second location of the object, and setting the moving time of the object to be the second time, responsive to determining that the object has moved to the second location that is in a second area that is different from the first area.

In some embodiments, the movement sensor may periodically determines, at a first periodic rate, if the object is moving. The position system may determine, at a second periodic rate, a current location of the object. The first periodic rate may be faster than the second periodic rate. Information related to the second time may be saved, responsive to the determining that the object is moving. The method may refrain from saving information related to periodically checking for movement of the object, responsive to determining that the object is not moving. The first periodic rate of the movement sensor that periodically determines if the object is moving may be at least ten times faster than the second periodic rate of the position system determining the current location of the object. Setting the moving time may occur at a fourth time that is after the third time. The second location may be associated with a waypoint in the transportation system at which the object is designated to arrive or depart.

In some embodiments, the method may include determining respective current locations of the object based on periodic current location information provided periodically from the positioning system, and identifying that the object is stationary based on determining that a number of the respective current locations that are in a same location area is greater than a threshold number. The method may include mapping the same location area to a waypoint in the transportation system, determining a waypoint stop time based on a first waypoint time associated with a first one of the respective current locations being in the same location area and a second waypoint time associated with a second one of the respective current locations being in the same location area, and identifying the waypoint as a bottleneck in the transportation system, based on the waypoint stop time exceeding a threshold time. The second waypoint time associated with the second one of the respective current locations being in the same location area may correspond to a latest time of occurrence of the respective current locations being in the same location area.

In some embodiments, the method may include determining that the same location area corresponds to a transport location area that is between waypoints in the transportation system, and identifying a delay area in the transportation system based on the identifying that the object is stationary and the determining that the same location area corresponds to the transport location area that is between waypoints. The method may include determining an average location in the same location area based on an aggregation of respective current locations of the object, responsive to the identifying that the object is stationary. In some embodiments, the method may include discarding ones of the respective current locations of the object, responsive to the ones of the respective current locations being in a different location area from a previous one of the respective current locations, and discarding ones of the respective current locations of the object, responsive to the number of ones of current locations that are in the same location area being less than the threshold number. In some embodiments, the method may include discarding the second time as being related to an invalid movement, responsive to determining, based on the positioning system, that the object has not moved into a new area that is different from the first area. The movement sensor may include an accelerometer or a gyroscope. The positioning system may include a Global Positioning System (GPS).

Some embodiments are directed to a computer program product for tracking an object in a transportation system, the computer program product including a non-transitory computer readable storage medium having computer readable program code embodied in the medium that when executed by a processor causes the processor to perform the method of any of any of the operations described herein.

Some embodiments are directed to a wireless electronic device, including a processor and a memory coupled to the processor and storing computer readable program code that when executed by the processor causes the processor to perform operations including receiving, first information including a first time and a first location of the object based on a positioning system. A first area includes the first location. The processor may perform operations including receiving, from a movement sensor, second information including an indication that the object is moving and a second time at which the object is moving. The second time occurs after the first time. The processor may perform operations including receiving, third information including a third time and a second location to which the object has moved based on the positioning system. The third time occurs after the second time. The processor may perform operations including setting the moving time of the object to be the second time, responsive to determining that the object has moved to the second location that is in a second area that is different from the first area.

In some embodiments, the processor of the wireless electronic device may be further configured to perform operations including determining respective current locations of the object based on periodic current location information provided periodically from the positioning system, and identifying that the object is stationary based on determining that a number of the respective current locations that are in a same location area is greater than a threshold number. The processor may further configured to perform operations including mapping the same location area to a waypoint in the transportation system, determining a waypoint stop time based on a first waypoint time associated with a first one of the respective current locations being in the same location area and a second waypoint time associated with a second one of the respective current locations being in the same location area, and identifying the waypoint as a bottleneck in the transportation system, based on the waypoint stop time exceeding a threshold time.

Some embodiments are directed to a system for tracking an object in a transportation system. The system includes a processor, and a memory coupled to the processor and storing computer readable program code that when executed by the processor causes the processor to perform operations including determining, at a first time, a first location of the object based on a positioning system. A first area includes the first location. The method includes determining, based on a movement sensor, that the object is moving. The movement sensor determines that the object is moving at a second time that is after the first time. The method includes determining, at a third time that is after the second time, based on the positioning system, a second location of the object, and setting the moving time of the object to be the second time, responsive to determining that the object has moved to the second location that is in a second area that is different from the first area.

It is noted that aspects of the inventive concepts described with respect to one embodiment, may be incorporated in a different embodiment although not specifically described relative thereto. That is, all embodiments and/or features of any embodiment can be combined in any way and/or combination. Other operations according to any of the embodiments described herein may also be performed. These and other aspects of the inventive concepts are described in detail in the specification set forth below.

### Brief Description of the Drawings

Figure 1 and Figure 2 illustrate cargo in a transportation system, according to various embodiments described herein.
Figures 3 to 9 are flowcharts of operations for tracking an object in a transportation system, according to various embodiments described herein.
Figures 10 and 11 are block diagrams of wireless electronic devices, according to various embodiments described herein.

### Detailed Description

Various embodiments will be described more fully hereinafter with reference to the accompanying drawings. Other embodiments may take many different forms and should not be construed as limited to the embodiments set forth herein. Like numbers refer to like elements throughout.

Transportation systems include complex logistics spanning vast geographical areas, using multiple modes of transportation and/or multiple transportation carriers. Various waypoints may be included in a transportation path as various transportation modes and/or carriers are involved in the transport of objects from a source point to a destination point in the transportation network. As used herein, a waypoint may be a point or a location on a route or line of travel, which may include a starting point, a destination point, or points therebetween, which separate various legs of the transportation route. Modes of transportation and/or carriers may change at a waypoint, or a waypoint may be a rest point or a checkpoint. Cargo owners, transportation coordinators, and/or carriers may need accurate information regarding the location of objects during transport. Existing techniques may use navigation systems such as Global Positioning Systems (GPS) to determine the location of a vehicle in the transport chain. However, existing techniques using GPS may be insufficient in accurately estimating the positioning and/or accurate time of arrival/departure of objects being transported at various waypoints in the transportation route. Also different objects may travel using different vehicles and different carriers to a destination, so that is would be helpful to have tracking tied to specific objects, instead of to the modes of transportation. Additionally, GPS receivers may use much power, be inaccurate in location, and may only sample the location at a large time interval, such as 15 minutes or 30 minutes due to power considerations. Advantageously, various embodiments described herein may arise from recognition that accurately determining the location and/or time of arrival and/or departure may be important in transportation networks.

Cargo or other objects may be tracked while in transit to determine the location and the time of arrival and/or departure at various waypoints in the transportation route. Legacy tracking units may rely on positioning systems such as GPS or Global Navigation Satellite System (GNSS) to track cargo or shipments. Cellular tracking systems may be used in lieu of or in conjunction with positioning systems to improve tracking of cargo. A transceiver that communicates with a cellular system may be included with the tracking unit. The tracking unit may connect to the cellular system and obtain the position of a related base station or access point that is nearby. Cellular systems that provide information about locations of base stations and/or access points may be useful when the cargo is in areas with poor GPS signals such as in an airport or inside a cargo terminal. However, a cellular transceiver that is included as part of a wireless electronic device, such as a tracking unit, may consume a high amount of power and thus drain a battery of the tracking unit.

According to various embodiments described herein, tracking of objects, such as cargo or goods, may be accomplished using a wireless electronic device, such as a tracker or tracking unit that includes a movement sensor used in conjunction with information from a position system to improve tracking of the location and/or arrival and departure times. These tracking units may be portable battery operated wireless devices since power savings may be an important consideration. A movement sensor that is included in the tracking unit may draw a very small amount of current, such as in the range of 2 µA to 3 µA. In contrast, GPS receivers may use current of about 10 mA, which may be on the order of a thousand times more current than current drawn by a movement sensor. Therefore, use of a movement sensor to improve location and arrival/departure time tracking may be advantageous in providing a low power solution with improved accuracy of timing of movement of objects. A tracking unit may include a wireless electronic device that includes a transceiver for communication with a tracking system of an operator. The tracking unit may be placed with cargo or other objects that are being transported. The tracking unit may be affixed to the objects being transported such that the tracking unit moves with the objects when they are moved to different modes of transportation or to different transportation carriers.

For example, a tracking unit such as a wireless electronic device may be affixed to a package that includes an object at a source waypoint. The package including the object may be initially loaded onto a truck/lorry, and then moved to a ship at a port waypoint for sailing across a body of water. Another truck/lorry may take the package from the ship destination port waypoint and transport the object to a destination waypoint. Traditional transportation systems track packages by scanning each package at each point in the transportation chain and/or by tracking vehicles containing the packages. This scanning utilizes personnel employed by the carrier. However, if the different legs of the journey, i.e. from one waypoint to the next waypoint, are serviced by different carriers, a unified scanning and/or tracking methodology is difficult to implement across different carriers. Various embodiments described herein provide automatic tracking and timestamps for departure and/or arrival that are independent of different carriers in various legs of the journey of an object.

Waypoints in a transportation route may include a starting or departure waypoint, a destination waypoint, and/or intermediate waypoints. Positioning systems, such as GPS, typically provide location information every 15 to 30 minutes. Geofencing for determining a package location may be inaccurate and it may be difficult to distinguish locations that are less than 1 km apart due to variances of GPS systems. For example, if a truck/lorry carrying an object leaves a starting waypoint and travels half a kilometer from the starting waypoint, the GPS location may not be able to distinguish the actual location of the object from the starting waypoint. Various embodiments described herein use a movement sensor, such as an accelerometer or a gyroscope, to determine if the object has moved. In other words, the movement sensor is capable of detecting when the object has started moving. Due to low power requirements of movement sensors, the movement sensor may sample movement at a much higher rate than the positioning system.

For example, the movement sensor may check for movement every second vs. 15 minutes for a positioning system. The movement sensor may save the time when movement is first detected by the movement sensor. In other words, an object may be sitting on a truck that is parked at the starting waypoint for some amount of time. During the parked stage, the positioning system may periodically determine the location and may determine that the object is in a first area associated with the starting waypoint. At a future time that is the next sample time by the positioning system such as, for example, 15 minutes later, the positioning system may determine that the object mas moved 10 km from the starting waypoint. However, the exact time in the 15 minute window of the positioning system during which the object moved is not exactly known using positioning system data. However, these gaps in the timing of location identification by the positioning system may be remedied by using the movement sensor data that detected movement of the object and stored the time of movement. Since the movement sensor samples, for example, at 1 second intervals, the time that the object left the departure waypoint may be determined with finer granularity, i.e. within 1 second, compared to the 15 minute window when using the positioning system by itself. Once the positioning system information indicates that the object has moved out of a first area associated with the departure waypoint, the previous sensor data may be studied to determine when the object had left the departure waypoint. Erroneous movement sensor data may be filtered by ignoring movement indications that do not occur in conjunction with the positioning system indicating a new location area. For example, the movement sensor may erroneously indicate movement of the object if a truck/lorry engine is started but the vehicle is left idling at the departure waypoint. If the location indicated by the positioning system does not indicate that the object is in a new location, then this movement sensor data is ignored.

Processing of data from the positioning system and/or the movement sensor may be performed across a communication network associated with an operator of the transportation system. The operator may contract with various transportation carriers to move objects in the transportation system. A communication network may be used by the operator to collect data from various wireless electronic devices that interface with the positioning system and/or the movement sensor. In some embodiments, positioning information and/or movement sensor information may be stored as cloud services, in a database, and/or other memory systems.

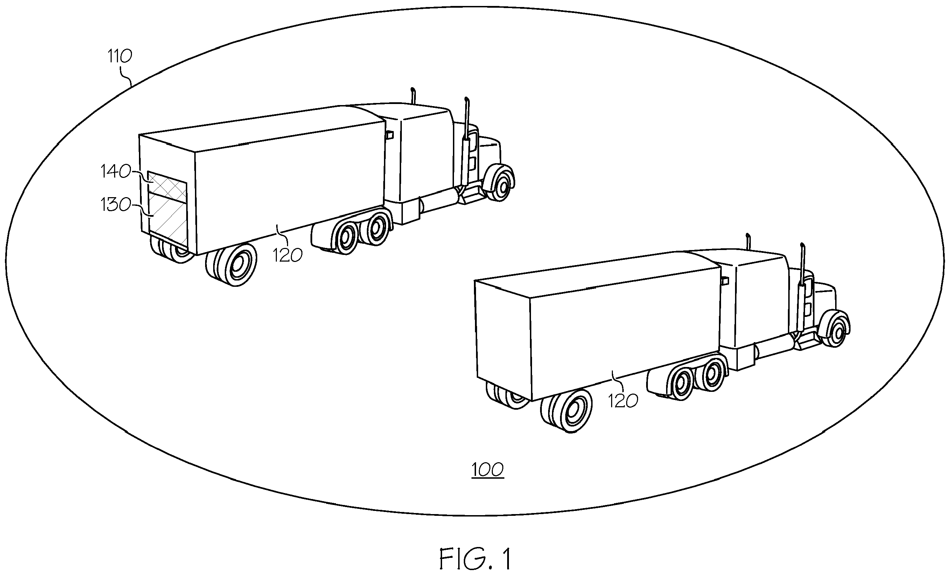

Figure 1 illustrates an object or cargo that is being transported in a transportation system. Referring now to Figure 1, a truck/lorry 120 may be parked at a departure waypoint 100. An object 130, such as cargo or goods, may be loaded onto the truck/lorry 120. A wireless electronic device 140 that may include a positioning system receiver and/or a movement sensor may be placed with the associated object 130. The movement sensor may include an accelerometer or a gyroscope. A gyroscope may indicate turning or change of direction of an object whereas an accelerometer may indicate change in speed of an object. The positioning system may include a Global Positioning System (GPS). A first location area 110 in the vicinity of the departure waypoint 100 may be defined such that locations identified within the first location area 110 are deemed to be associated with departure waypoint 100.

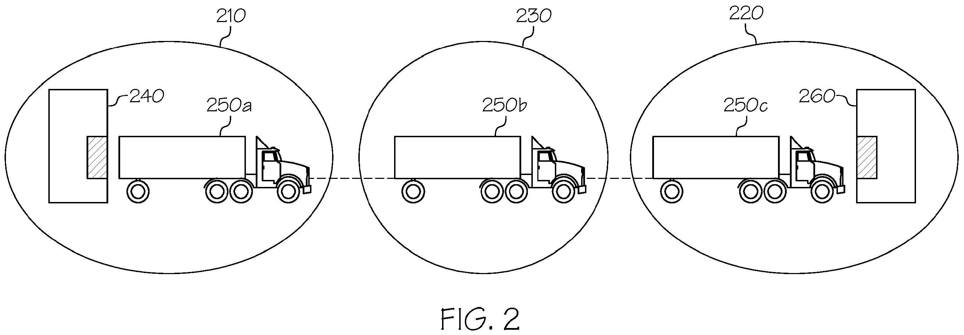

Figure 2 illustrates the transporting of an object in a transportation system. Referring now to Figure 2, a truck/lorry 250a may be parked at a transportation terminal that serves as departure waypoint 240, which may correspond to departure waypoint 100 of Figure 1. Cargo such as an object 130 of Figure 1 may be loaded onto truck/lorry 250a at a shipping terminal associated with departure waypoint 240. Departure waypoint 240 may be located in a geographical area corresponding to first location area 210. The truck/lorry 250b is in transit between departure waypoint 240 and destination waypoint 260, which may be in a second location area 230. The truck/lorry 250c may arrive at destination waypoint 260 that is in a third location area 220. A positioning system may determine that the object is in the first location area 210, second location area 230, or third location area 220. A movement sensor may determine that the object, along with the truck/lorry 250a, 250b, 250c is moving. Location areas 210, 220, 230 may be predetermined location areas or may be identified and/or demarked based on various location measurements by the positioning system.

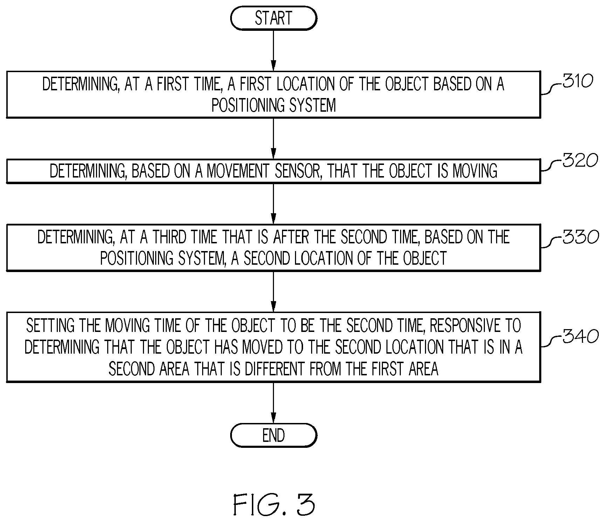

Figures 3 to 9 are flowcharts of operations for tracking an object in a transportation system. Referring now for Figure 3, at a first time, a first location of the object may be determined based on a positioning system, at block 310. A first area, corresponding to a first location area 210 of figure 2, may include the first location. It may be determined, based on the movement sensor, that the object is moving, at block 320. The movement sensor may determine that the object is moving at a second time that is after the first time. At a third time that is after the second time, based on the positioning system, a second location of the object may be determined, at block 330. The moving time of the object may be set to be the second time, responsive to determining that the object has moved to the second location that is in a second area that is different from the first area, at block 340. The movement sensor may periodically determine, at a first periodic rate, if the object is moving. The position system may determine, at a second periodic rate, a current location of the object. The first periodic rate may be faster than the second periodic rate. The movement sensor may save information related to the second time, responsive to the determining that the object is moving. The movement sensor may refrain from saving information related to periodically checking for movement of the object, responsive to determining that the object is not moving. The first periodic rate of the movement sensor periodically determining if the object is moving may be at least ten times faster than the second periodic rate of the position system determining the current location of the object. Setting the moving time may occur at a fourth time that is after the third time. In other words, once it is determined that the object has moved to a different location area, a review of historical information from the movement sensor may indicate when the object started moving. Based on this historical movement sensor information, the exact time of departure of the object may be determined, at a far greater level of granularity than the information offered by the positioning system. The second location may be associated with a waypoint in the transportation system at which the object is designated to arrive.

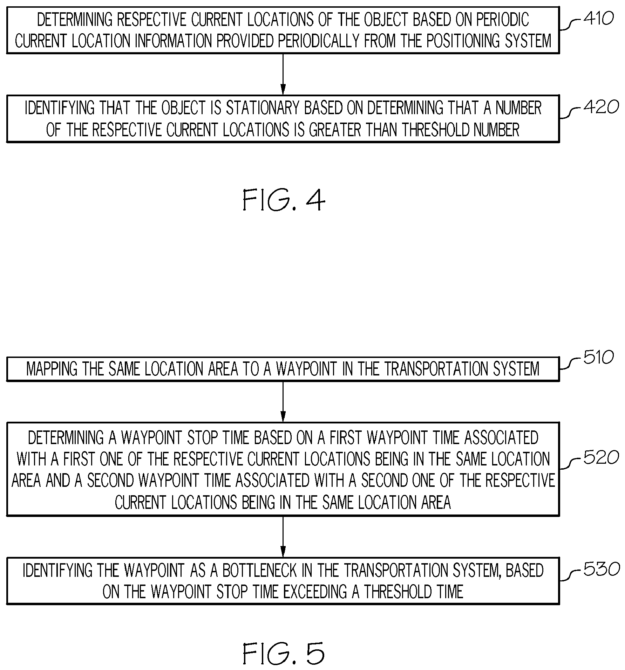

Referring now to Figure 4, respective current locations of the object may be determined based on periodic current location information provided periodically from the positioning system, at block 410. It may be identified that the object is stationary based on determining that a number of the respective current locations that are in a same location area is greater than a threshold number, at block 420. In other words, several consecutive samplings of the location information may be checked to confirm that the object is in the same location area, i.e. that the object is not moving or is staying in a confined area.

Referring now to Figure 5, the location area may be mapped to a waypoint in the transportation system at block 510. Mapping may be accomplished by identifying a location area that is closest to and/or contains the waypoint. A waypoint stop time may be determined based on a first waypoint time associated with a first one of the respective current locations being in the same location area and a second waypoint time associated with a second one of the respective current locations being in the same location area at block 520. When a positioning system indicates that the object is in the same geographical area for multiple positioning windows, it may be determined that the object has stopped travelling or moving. A waypoint may be identified as a bottleneck in the transportation system, based on the waypoint stop time exceeding a threshold time, at block 530. However, in some cases, the waypoint may be a break area or rest area and has been designated as a stopping point in the transportation network. A second waypoint time associated with the second one of the respective current locations being in the same location area may correspond to a latest time of occurrence of the respective current locations being in the same location area.

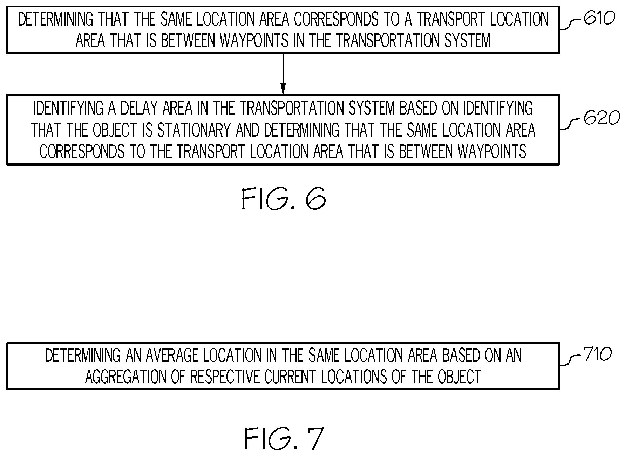

Referring now to Figure 6, it may be determined that the same location area corresponds to a transport location area that is between waypoints in the transportation system, at block 610. A delay area in the transportation system may be identified based on the identifying that the object is stationary and that the same location area corresponds to a transport location area that is between waypoints, at block 620. For example, the delay area may correspond to a traffic jam or other delay inducing event.

Position data over multiple iterations from the positioning system may be clustered to determine an average position. If the object or tracking unit is not moving, a "true position" may be calculated to create an area where the object is likely located. This "true position" may include mapping the position to a known waypoint. Referring now to Figure 7, an average location in the same location area may be determined based on an aggregation of respective current locations of the object, responsive to identifying that the object is stationary, at block 710. For various iterations, the positioning system may identify a variety of location points that are in the same location area. The average location may be based on determining an average latitude location and an average longitude location based on positioning system data. To determine the average location, some outlier location date points may be discarded. The various location points from the positioning system may be averaged or otherwise aggregated to determine an average location or a likely location within the location area.

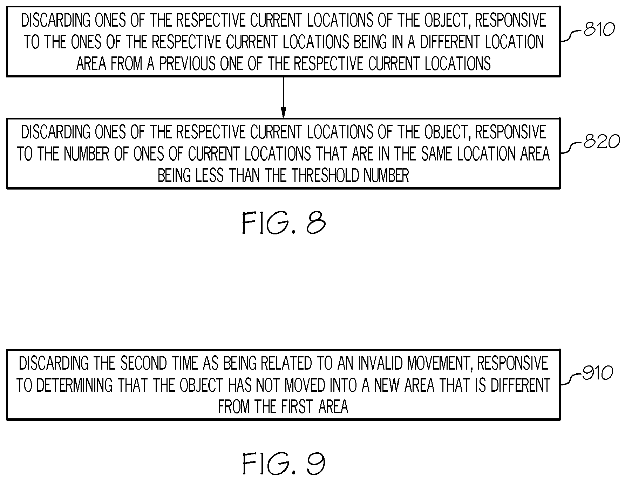

Referring now to Figure 8, in some embodiments, some of the respective current locations of the object may be discarded if they are in a different location area from a previous one of the respective current locations at block 810. Some of the respective current locations of the object may be discarded if the number of the various locations that are in the same location area is less than the threshold number at block 820. If subsequent locations from the positioning system are in the same location area, then it may be determined that these are based on a very small movement of the object cause by actions such as idling of a vehicle, backing a truck for better alignment with the loading dock, or location measurements within the tolerances of the positioning system.

Referring now to Figure 9, in some embodiments, the second time may be discarded as being related to an invalid movement, responsive to determining, based on the positioning system, that the object has not moved into a new area that is different from the first area at block 910. In other words, if the positioning system determines that the object has not moved, but the movement sensor indicates movement of the object, then it may be concluded that the object has not moved and the movement sensor detected another movement unrelated to transportation of the object.

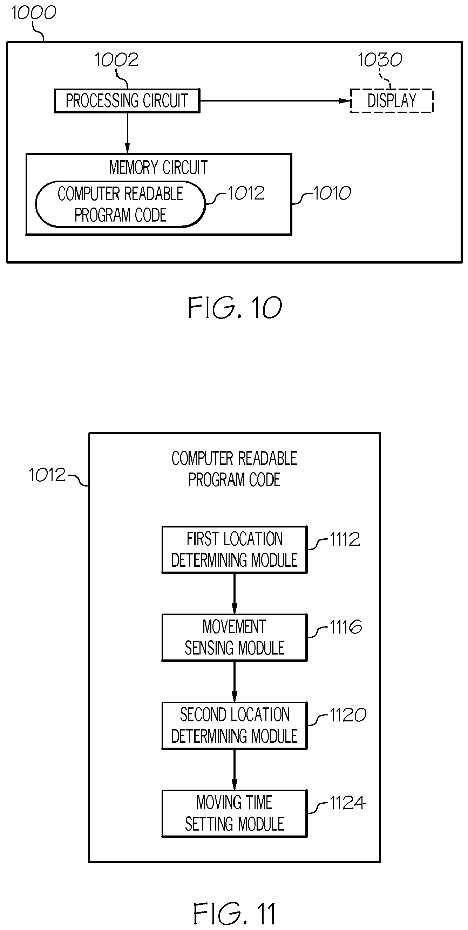

Figure 10 is a block diagram of a wireless electronic device 1000, such as a tracker or wireless electronic device 140 of Figure 1. The wireless electronic device 1000 may be integrated with a positioning system device or GPS device and/or may be external to the GPS and is configured to perform operations according to one or more embodiments disclosed herein. Referring to Figure 10, the wireless electronic device 1000 includes a display 1030, a processor circuit 1002, and a memory or memory circuit 1010 containing computer readable program code 1012. Display 1030 may include a display circuit, display driver, and/or a screen for display/viewing information related to location and/or time stamps. The processor or processor circuit 1002 may include one or more data processing circuits, such as a general purpose and/or special purpose processor, e.g., microprocessor and/or digital signal processor, which may be collocated or distributed across one or more networks. The processor circuit 1002 is configured to execute the computer readable program code 1012 in the memory 1010 to perform at least some of the operations and methods of described herein as being performed by the wireless electronic device 1000. A wireless interface may be coupled to the processor circuit 1002 and may communicate with a server or other external network entity, directly or indirectly.

Figure 11 illustrates modules for a position tracking module that perform operations as disclosed herein according to some embodiments. The computer readable program code 1012 of Figure 10 may include one or more modules. Referring now to Figure 11, the computer readable program code 1012 may include a first location determining module 1112, a movement sensing module 1116, second location determining module 1120, and moving time module 1124. The first location determining module 1112 is for determining, at a first time, a first location of the object based on a positioning system (block 310 of Figure 3). The movement sensing module 1116 is for determining that the object is moving based on a movement sensor (block 320 of Figure 3). The second location determining module 1120 is for determining, at a third time that is after the second time, a second location of the object (block 330 of Figure 3). The moving time setting module 1124 is for setting the moving time of the object to be the second time, responsive to determining that the object has moved to the second location that is in an area that is different from the first area (block 340 of Figure 3). The modules 1112, 1116, 1120, and 1124 may perform other corresponding operations and methods disclosed herein.

### Further Embodiments:

In the above-description of various embodiments of the present disclosure, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art, and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present disclosure may be embodied in hardware and/or in software (including firmware, resident software, microcode, etc.) that runs on a processor such as a digital signal processor, which may collectively be referred to as "circuitry," "a module" or variants thereof.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods, and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination. Many variations and modifications can be made to the embodiments without substantially departing from the principles described herein. All such variations and modifications are intended to be included herein within the scope.

## Claims

1. A method of tracking an object (130) in a transportation system, the method comprising:
determining (310), at a first time, a first location of the object (130) based on a positioning system, wherein a first area comprises the first location;
determining (320), based on a movement sensor, that the object (130) is moving, wherein the movement sensor determines that the object (130) is moving at a second time that is after the first time;
determining (330), at a third time that is after the second time, based on the positioning system, a second location of the object (130); and
setting (340) a moving time of the object (130) to be the second time, responsive to determining that the object (130) has moved to the second location that is in a second area that is different from the first area.

2. The method of Claim 1,
wherein the movement sensor periodically determines, at a first periodic rate, if the object (130) is moving,
wherein the position system determines, at a second periodic rate, a current location of the object (130), and
wherein the first periodic rate is faster than the second periodic rate.

3. The method of Claim 2, further comprising:
saving information related to the second time, responsive to the determining that the object (130) is moving, and
refraining from saving information related to periodically checking for movement of the object (130), responsive to determining that the object (130) is not moving.

4. The method of any of Claims 1 to 3, wherein the setting the moving time occurs at a fourth time that is after the third time.

5. The method of any of Claims 1 to 4, wherein the second location is associated with a waypoint in the transportation system at which the object (130) is designated to arrive or depart.

6. The method of any of Claims 1 to 5, further comprising:
determining (410) respective current locations of the object (130) based on periodic current location information provided periodically from the positioning system; and
identifying (420) that the object (130) is stationary based on determining that a number of the respective current locations that are in a same location area is greater than a threshold number.

7. The method of Claim 6, further comprising:
mapping (510) the same location area to a waypoint in the transportation system;
determining (520) a waypoint stop time based on a first waypoint time associated with a first one of the respective current locations being in the same location area and a second waypoint time associated with a second one of the respective current locations being in the same location area; and
identifying (530) the waypoint as a bottleneck in the transportation system, based on the waypoint stop time exceeding a threshold time.

8. The method of Claim 7, wherein the second waypoint time associated with the second one of the respective current locations being in the same location area corresponds to a latest time of occurrence of the respective current locations being in the same location area.

9. The method of any of Claims 6 to 8, further comprising:
determining (610) that the same location area corresponds to a transport location area that is between waypoints in the transportation system; and
identifying (620) a delay area in the transportation system based on the identifying that the object (130) is stationary and the determining that the same location area corresponds to the transport location area that is between waypoints.

10. The method of any of Claims 6 to 9, further comprising:
determining (710) an average location in the same location area based on an aggregation of respective current locations of the object (130), responsive to the identifying that the object (130) is stationary.

11. The method of any of Claims 6 to 10, further comprising:
discarding (810) ones of the respective current locations of the object (130), responsive to the ones of the respective current locations being in a different location area from a previous one of the respective current locations; and
discarding (820) ones of the respective current locations of the object (130), responsive to the number of ones of current locations that are in the same location area being less than the threshold number.

12. The method of any of Claims 1 to 11, further comprising:
discarding (910) the second time as being related to an invalid movement, responsive to determining, based on the positioning system, that the object (130) has not moved into a new area that is different from the first area.

13. The method of any of Claims 1 to 12, wherein the movement sensor comprises an accelerometer or a gyroscope.

14. The method of any of Claims 1 to 13, wherein the positioning system comprises a Global Positioning System (GPS).

15. A wireless electronic device (140), comprising:
a processor (1002); and
a memory (1010) coupled to the processor (1002) and storing computer readable program code (1012) that when executed by the processor (1002) causes the processor (1002) to perform operations comprising:
receiving, first information comprising a first time and a first location of an object (130) based on a positioning system, wherein a first area comprises the first location;
receiving, from a movement sensor, second information comprising an indication that the object (130) is moving and a second time at which the object (130) is moving, wherein the second time occurs after the first time;
receiving, third information comprising a third time and a second location to which the object (130) has moved based on the positioning system, wherein the third time occurs after the second time; and
setting the moving time of the object (130) to be the second time, responsive to determining that the object (130) has moved to the second location that is in a second area that is different from the first area.
